Europäisches Patentamt

European Patent Office

Office européen des brevets

(19)

(11) Publication number: **0 021 794**
**A1**

(12) **EUROPEAN PATENT APPLICATION**

(21) Application number: 80302064.3

(22) Date of filing: 18.06.80

(51) Int. Cl.³: **B 65 H 7/14**
**G 06 F 15/20**

(30) Priority: 25.06.79 GB 7922007

(43) Date of publication of application:
07.01.81 Bulletin 81/1

(84) Designated Contracting States:
AT BE CH DE FR IT LI LU NL SE

(71) Applicant: PLASMEC LIMITED
Weydon Lane
Farnham Surrey GU9 8QL(GB)

(72) Inventor: Jones, Mark Eric
288, High Street
Dorking Surrey(GB)

(74) Representative: Messulam, Alex Moses et al,
MARKS & CLERK 57/60 Lincoln's Inn Fields
London WC2A 3LS(GB)

(54) Automatic image checking device.

(57) The present invention relates to the automatic checking of images and finds particular application in the checking of images recorded on microfilm.

In common with known equipment the checking device comprises a scanning array, a field of view and means for providing relative movement between the two. In the known equipment, scanning of the image is carried out in a direction orthogonal to the direction of relative motion, this results in poor data collection for image edges orthogonal to the direction of relative motion. In order to improve the quantity of data in respect of these edges, in the present invention the scans are inclined with respect to the direction of relative motion.

In order that the images may be checked at a speed in excess of that possible by the known analysis of the images in real time, the present invention provides for the use of sampling windows along each scan to track the edges of the images. This tracking is significantly improved by allowing for the displacement of a sampling window by a preset distance along the scan in accordance with the analysis of the data within that window in the previous scan if that analysis failed to detect the image edge.

EP 0 021 794 A1

./...

FIG. 3.

## AUTOMATIC IMAGE CHECKING DEVICE

The present invention relates to the automatic checking of images by scanning and is particularly applicable to the automatic checking of images on microfilm or microfiche.

After documents have been recorded on microfilm or microfiche and developed it is necessary to check that the images are satisfactory before the original documents are released. A thorough visual check is laborious and even under ideal conditions, using microfilm, less than 100 images can be checked per minute and operators need a rest after 45 minutes.

Automatic checking of the images can be effected by the analysis of picture points which can be produced by a raster scan or by moving the images past a photosensitive array. The checking of the images comprises the verification of several parameters, the most basic of which are the dimensions and shape of the images. Many of the verification parameters are difficult to check automatically at high speed. In particular, problems arise in the high speed automatic checking of the extent to which corners of documents of varying size have been turned over, the edges of the document have been torn, the presence of overlap and also the degree of skew of the documents relative to the direction of motion of the film.

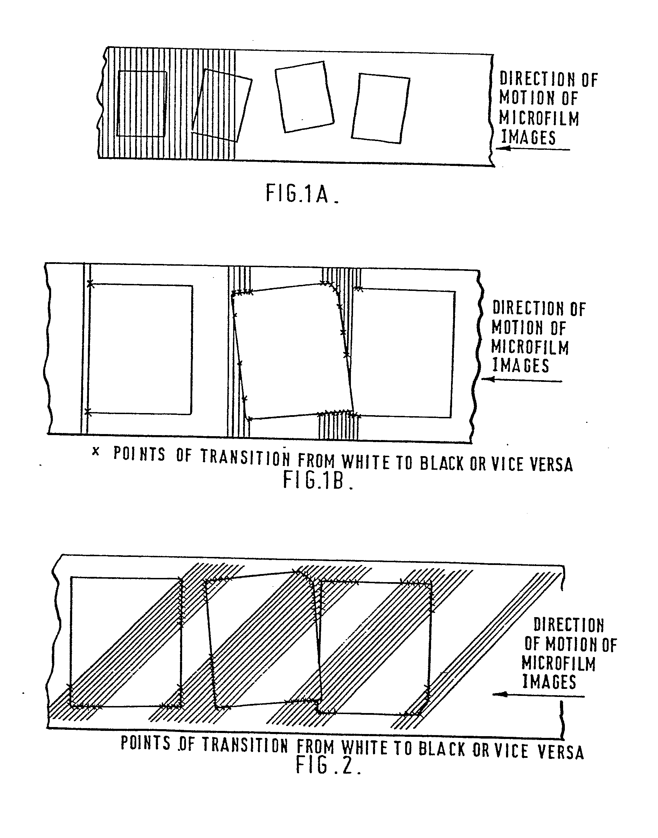

Equipment is known wherein the image of a flying spot generated on the face of a cathode ray tube scans a microfilm as it is moved past the tube. The transmitted light is measured by a photomultiplier which is used to recreate an enlarged image on a second cathode ray tube. The equipment is arranged such that the scan lines are orthogonal to the direction of motion of the film, that is orthogonal to the longitudinal edge of the film. This is shown in Figure 1A. The data from the photomultiplier is used to measure the extent to which part of the image may be missing, and to detect whether the images overlap. If tests indicate an unsatisfactory image the film is stopped and back tracked until the reconstructed image is presented on the second cathode ray tube to allow the operator to decide whether to accept or reject the image.

Using such equipment it has become possible to check several thousand images per minute. However, attempts to further improve the automatic verification to a significant extent, particularly when images of varying size are contained on the microfilm, have shown that there is a fundamental limitation to the performance obtainable using the known equipment. Namely, the time series information available at the scanner output contains a large amount of precise positional information concerning the edges of the images approximately parallel with the direction of motion of the microfilm whilst containing relatively smaller amounts of positional information concerning the edges of the images approximately orthogonal to the direction of motion of the film. When images overlap the available information concerning edges of the document is further restricted. The problems associated with the conventional method of scanning the images are illustrated

in Figure 1B.

In the known equipment, the relatively small amount of positional data available concerning the image edges approximately orthogonal to the direction of motion of the microfilm has resulted in the frequency of stopping for operator assessment becoming excessive. Often the automatic checking is stopped even though length, skew and turned up corners on the document as shown by the image were within acceptable limits, furthermore the number of different document sizes which could be checked to separately specified tolerances on one film is unduly limited.

According to the present invention, there is provided an automatic image checking device comprising a scanning array and a device for providing relative movement between the scanning array and the images to be checked lying within a field of view, characterised in that the scan lines of the array are inclined with respect to the direction of relative motion so as to increase the number of scan lines containing data relating to image edges orthogonal to the said direction of relative motion.

Similar degrees of statistical accuracy concerning the positional information of the edges of the document images are obtained by adjusting the orientation of the scanning raster or scanning array with respect to the orientation of the images on the microfilm.

An embodiment of the present invention will now be described by way of example only and with reference to the accompanying

- 4 -

drawings, in which:

Figure 1A and 1B illustrate the known method of scanning images on microfilm to produce picture points which can be analysed to check the image and problems associated with this method,

Figure 2, illustrates the scanning of microfilm images using a direction of scan which is inclined at an angle of approximately $45^{\circ}$ to the direction of motion of the film and the consequential improvement in the quantity of positional information concerning image edges substantially perpendicular to the direction of motion of the film,

Figure 3, is a partial diagrammatic and a partial block diagram showing the main components of a checking device,

Figure 4, illustrates the mode of tracking the edge of an image utilizing sampling windows,

Figure 5, is a state diagram useful in explaining the detection within a sampling window of a white to black edge of an image,

Figure 6 is a diagram setting out in tabulated form the detection of a white (clear film) to black (document negative image) edge of an image within a sampling window,

Figure 7, is similar to Figure 6 but illustrates the black to white edge detection, and

Figure 8, illustrates the scanning of images which have an intentionally clipped corner.

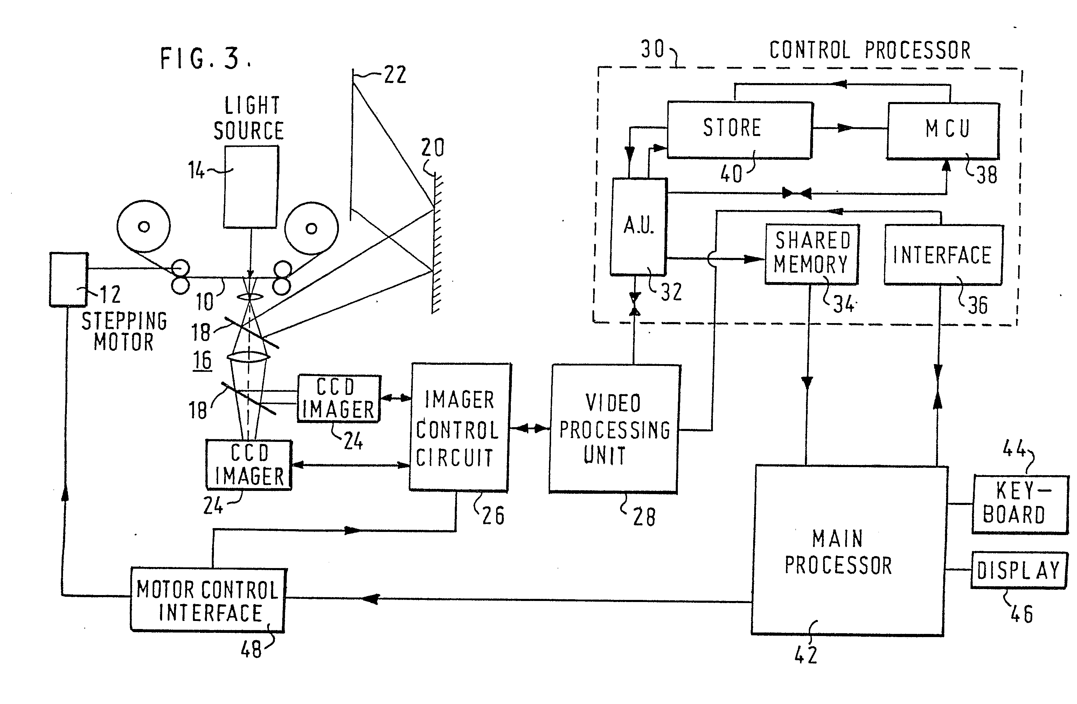

Similar degrees of statistical accuracy concerning the positional information of the edges of the document images are obtained by adjusting the orientation of the scanning raster or scanning array with respect to the orientation of the images on the microfilm. From Figure 2, it can be seen that by rotating the scanning array so that it is inclined at 45 degrees to the direction of motion of the film an equal amount of positional information per unit time is obtained for each side of a corner.

Figure 3 illustrates a device for the automatic checking of microfilm images. A microfilm 10 containing document images is indexed by a stepping motor 12. A light source 14 is positioned on one side of the microfilm 10 and an optical system generally designated by the reference numeral 16 is located opposite the light source. The optical system 16 comprises two beam splitters 18 one of which directs part of the transmitted light to a viewing screen 22 via a mirror 20, the other beam splitter 18 directs the remaining transmitted light onto two charged coupled device (CCD) imagers 24. An example of such an imager being the Fairchild CCD imager. The CCD imagers 24 are connected to an imager control unit 26. The imager control unit 26 contains circuits for driving the CCD imagers 24 and also contains circuits for producing a digital output from the CCD imagers 24 analogue output signals.

The imager control unit 26 contains two comparators, one per CCD imager 24, and these sequentially compare the analogue signal from each cell of the respective imager array with a preset black level. If the comparison succeeds the output from the particular cell is said to be black and is designated by a logic 1 and if the comparison fails the cell output is said to be white and is designated by a logic 0. The output of only one of the imagers 24 is passed to the video processing unit 28 at any one time and selection between the imagers is controlled by the control processor 30. Of the two imagers 24, one is positioned such that the projected image of the microfilm is aligned with the axes of the imager array whilst the other imager is positioned such that the projected image is inclined at 45 degrees with respect to the imager array. Each of the imagers 24 comprise a linear array of 256 photocells.

The imager control circuit 26 is connected to a video processing unit 28 which controls different modes of data aquisition and carries out preliminary processing of the data obtained from the imagers 24. The control processor, designated generally by the reference numeral 30, provides arithmetic support for the video processing unit 28, effects additional control functions and provides an interface with the main processor 42. The control processor 30 comprises a microprogram store 40 and a microcode sequencer 38 which control the operation of the processor, an arithmetic unit 32 and a shared memory 34 and an interprocessor interface 36 both of which are connected to the main processor 42. The main processor 42 controls the overall functioning of the verification device and in particular it is connected to a keyboard 44, via which the operation of the device is controlled, a display device 46 which is used inter alia for identifying certain types of image faults, and is connected to a motor control interface 48 which controls the stepping motor 12. A feedback is provided from the motor control interface 48 to the imager control unit 26.

Detailed construction, functions and inter-relation of the above units are described in greater detail in the description of the operation of the verification device given below. In the following description the use of a microfilm containing negative images recorded against a white background will be assumed although the operation is equally applicable to positive images. If the film background is not of a sufficiently different colour from the image background then known techniques using such parameters as polarization or reflectivity may be employed in order to distinguish between the two.

A zone of interest on the microfilm is selected by the main processor 42 which can be controlled in this respect by the operator via the keyboard 44. For example, the microfilm may contain two tracks one of which is to be monitored on the forward wind of the film, the other track being monitored on the reverse wind of the track. In both cases the full width of the microfilm is projected onto the CCD imagers 24 and the main processor selects the track to be monitored by the selection of a zone which has a width of slightly less than one half the film width. The zone width is less than half the width of the film so as to avoid the erroneous monitoring of the film edge and of the central bar coding which is often recorded along the centre of a microfilm.

In order to start or re-start the checking process it is necessary to locate the leading edge of an image. The leading edge of an image is detected by first locating a gap between successive images. This is carried out using the imager 24 which has its cell array aligned orthogonal to the edge of the microfilm. Under the control of the main processor 42 the microfilm 10 is scanned indexed by the stepping motor 12, until all of the picture points, each one corresponding to a cell of the imager array, simultaneously detect a white film element. This detection is carried out by the control processor 30 under the supervision of the main processor 42 and is a technique which is used in the known devices. During the detection of an inter-image gap allowances are made so that the presence of dust or similar foreign bodies impairing the film surface do not prevent detection and since this process is used in the known devices it will not be described in detail.

Once a gap between images has been located and verified, the control processor 30 under the supervision of the main processor 42 switches between the imagers 24 so that the output from the imager 24 having its array inclined with respect to the film is passed to the video processing unit 28. At the same time the control processor initiates a search mode of operation, which is subsequently controlled by the video processing unit 28. The location on the microfilm 10 at which the projections of the respective cell arrays intersect is at the centre of the film.

In order to reduce the quantity of processing required, the scan lines are initiated by the motor control interface 48, in a preselected ratio to the stepping motor pulses which in combination with the ratio of mechanical drive of the image is such that one increment of the stepping motor corresponds to the distance between picture elements on a scan inclined at 45 degrees with respect to the film when measured in a direction parallel to the edge of the film. That is to say that the resolutions perpendicular and parallel to the edge of the film are equal. It should be noted that there need not be any such correlation and that other correlations are also advantageous, for example, if the resolution in one direction is twice that in the other direction.

The video processing unit 28 contains 4 latches which are of the 74 S 374 type. In the search mode of operation two of the latches define the start of a respective sampling window each of ten data bits in length. Each data bit corresponding to a picture point which in turn corresponds to a single cell of the imager array. The starting point of one of the sampling windows is positioned at one limit of the zone of the microfilm under investigation. The other sampling window has its start position located at position where the first window ends. The portion of the scan array between the two start positions defines a scan segment. The data bits along the scan line are analysed by a sampling window 6 data bits in length. The 6 bit sampling window selects the first 6 picture points, these 6 picture points are then compared with a look up table stored in a PROM. Each black picture point is assigned a weighting factor which is dependent upon the location of the point within the 6 bit window. The weighting factors are allocated within the 6 bit window on a binominal basis. The 6 bit sampling window is progressed one data point at a time, that is five of the data points are common to the subsequent group of data points sampled. When the 6 bit sampling window first falls within the scan segment the sum of the awarded weighting factors is read into a further latch.

Each subsequent sum of awarded weighting factors is compared with the sum stored in the latch and if found to be greater than the stored sum replaces that sum in the latch. When all of the data points in the scan segment have been sampled in this fashion the highest sum of weighting factors will be held in the latch. If a stored sum exceeds a preset threshold value then the location of the start of the 6 bit sampling window when that sum was calculated is stored in a still further latch. The threshold value is the value at which a transition between the film background and an image is considered to occur. This process ensures that defects of the film surface, e.g. dust, do not affect the reliability of detecting an image. It should be noted that the video processing unit 28 produces timing signals which are used for initiating scans and also for the clocking of data out of the CCD imager 24. The video processing unit also contains a counter which counts the number of clock pulses supplied to the CCD imagers 24 and this counter is used to identify the position of data points within the scan, for example, the current position of the start of the 6 bit sampling window.

If none of the weighting factor summations within the scan segment surpass the threshold then the next scan is initiated after the stepping motor has indexed one step. Before the 6 bit sampling window begins analysing the data within this next scan the length of the scan segment is incremented by one picture point. This increment is achieved by the start position of the 10 bit window not located at the zone edge being moved by one picture point.

Analysis by the 6 bit sampling window and incrementation of the scan segment continues until the threshold value is exceeded. When the threshold has been exceeded a further scan is undertaken in order to verify that a corner of a document image has been located. The control processor 30 then switches the video processing unit 28 from the search mode into a tracking mode of operation. The function of this mode of operation is to track the edges of a document image so that the various parameters such as length, width, skew, damaged edges or corners, overlap etc. can be checked. This technique of edge tracking is necessary due to the high operating speed of the checking device. With the stepper motor indexing at upto 8000 times per second, corresponding to 30 meters of film per minute, and a data bit rate of 6 M bit/sec it is not possible to process each image in real time. The tracking process uses high speed digital circuits within the video processing unit 28 and is controlled by the high speed control processor 30. The control processor 30 passes tracking data e.g. the location of the corners of the document from the video processing unit 28 to the main processor 42 which carries out checks to ensure that for example the document image conforms to a preset size.

The data points specified by two of the four latches contained within the video processing unit 28 are positioned adjacent the located corner of the document image when the video processing unit is switched into the tracking mode of operation. This is accomplished by using the location of the corner stored at the end of the search mode. The picture points specified by the two ten bit windows constituted by the latches have nine picture points in common, the central common data point being positioned adjacent the detected corner of the image. The data points contained within each of the ten bit windows are compared with a look up table stored in a PROM and a weighting factor is applied to each black data bit. This look up table is different from the one employed during the search mode and here the weighting factors depend upon sequential occurrances of black data bits. The output of the comparator which compares the contents of the ten bit window with the look up table is a four bit code which specifies the position of the detected edge of the document within the ten bit window. For the next scan the window is moved so that the predicted edge position is in the middle of the window. In practice, however, a torn edge, or abnormal change of skew may result in the edge of the image being outside of the window and a considerable improvement in edge tracking by the window has been achieved by arranging that if the edge is unexpectedly lost the window is moved by a specific number of picture points in the direction predicted by a special 4 bit code resulting from the table look-up. The alternative of looking in each direction is less satisfactory because it is not only slower but may result in the window trying to follow text near the edge of the document rather than the edge.

Use of the ten bit tracking windows means that instead of processing 256 data bits per scan of the image, the control processor only processes 8 data bits per image scan, 4 bits per window, whilst the main processor processes even less data.

When the stepper motor is indexed and the next scan occurs the locations of the ten bit windows are adjusted in accordance with the four bit code resulting from the previous scan so as to centralise the windows on the expected position of the edge of the image. The effective algorithm applied by means of the look up table to each of the two latches differs such that one window is tracking a white to black transition whilst the other is tracking a black to white transition. The control processor adjusts the position of the ten bit windows within the next scan by inspecting the 4 bit look up table comparator output in the current scan. If the 4 bit code, which is in binary, specifies decimal 2 to 8 then the arithmetic unit 32 within the processor 30 adds the specified decimal to the picture point location and then subtracts 5 in order to centralise the window for the next scan. If, however, the specified decimal is 0 or 1 the control processor moves the window by five data points in the direction signified, 0 and 1 signifying different directions, in the hope of finding the edge of the image within the window on the subsequent scan. If the 4 bit code is 1 this signifies that the window contains too many black data points, i.e. the window is within the image, whilst if the code is 0 this signifies that the window contains too many white data points, i.e. the window is outside of the image. The edge of the image may move out of the ten bit window in this fashion if the edge is damaged or if the document corner is turned up. Edge tracking will also fail if excessive skew is present, if the document edge has been missed and black/white transitions within the image are being followed and in some cases of document overlap. If detection of the edge of the image within the window fails after the window has been moved as the result of the 4 bit code 0 or 1, then the control processor signals the main processor which ends the tracking mode and stops the stepping motor. Due to the speed of operation the stepper motor will not stop instantaneously and consequently the main processor 42 counts the number of steps indexed before the motor does stop. The main processor then causes the film to be rewound so that the faulty image is displayed and centred on the viewing screen for manual checking. The main processor also indicates via the display device that the checking device was unable to follow the edge of the document. After manual verification the checking process is restarted as described above.

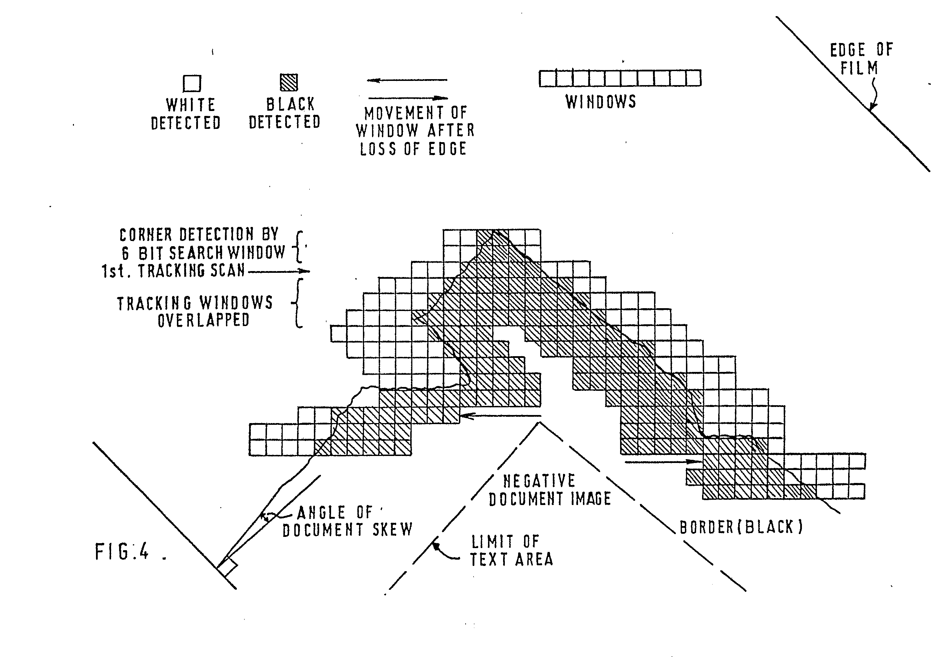

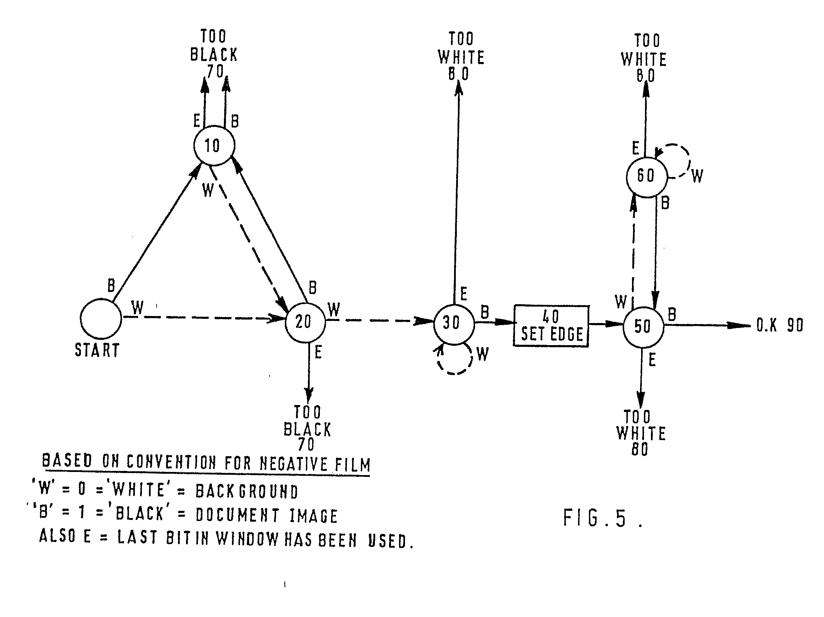

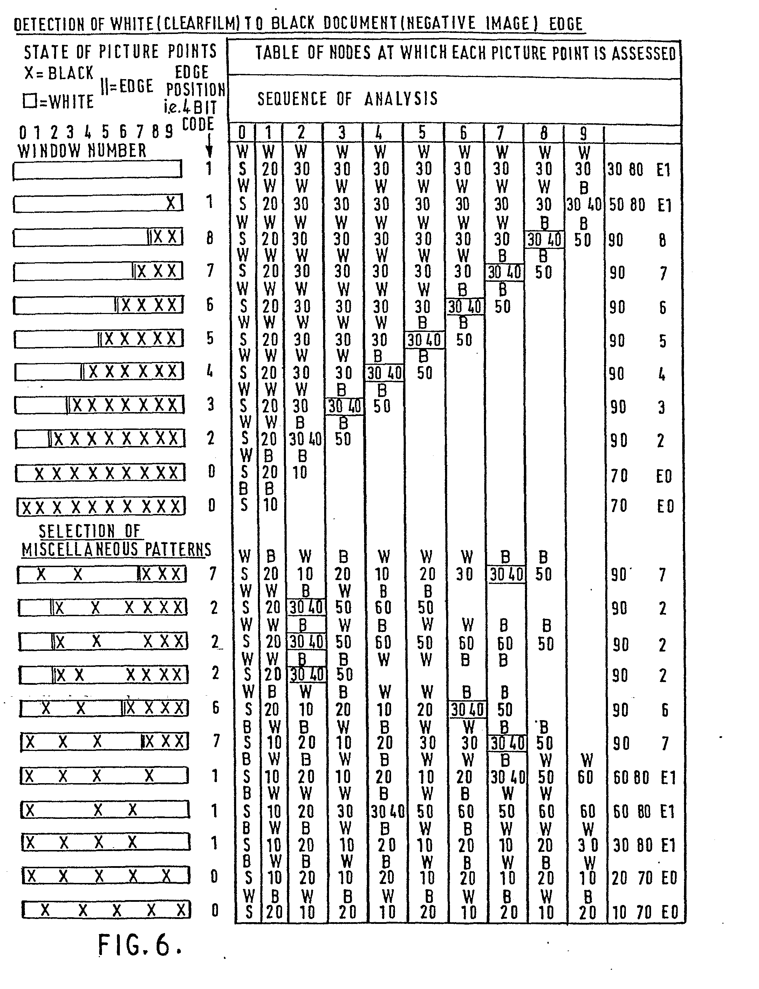

The algorithm used during the edge tracking process will be described in greater detail with reference to Figures 4 to 7. Figures 5 and 6 illustrate the detection of a white (clear film) to black (negative document image) transition. This detection occurs within the tracking window which is ten picture points long. The use of windows to track the edges of an image not only permits the speed of image checking to be improved but also facilitates the problem of defining what data should be ignored e.g. dust and other film surface blemishes. The white to black edge transition is defined as the first black position after two consecutive whites that have only been proceeded by single blacks. This must then be confirmed by there being two consecutive blacks somewhere after or including this edge position. Thus there must have been two whites before a black edge can be detected, and because a second black is necessary to confirm the edge, the edge locations are limited to positions 2 to 8. Figure 5 is a state diagram which illustrates the analysis of the ten picture points within a tracking window. Figure 6 shows some examples of the contents of a tracking window and the occurrance of such examples can be seen from Figure 4 which illustrates successive scans across a document image together with the corresponding contents, position and movement of the tracking windows. Associated with each example of the contents of a tracking window in Figure 6 is the corresponding sequence of analysis of the ten picture points in accordance with the state diagram of Figure 5. The white, black and state references used in Figure 5 are shown for each picture point of each example given in Figure 6. Figure 6 also lists the location of the respective edge positions in terms of the decimal form of the 4 bit code produced for each tracking window in each scan of the document image. The 4 bit codes signifying that an edge of the image has been found correspond to the window number within the tracking window. If whilst an edge is being followed, analysis of the data in the window reveals no edge, and predominant white has continued to picture point 9, a '1' is signalled indicating that the edge is probably beyond picture point 9. If analysis reveals no edge and predominant black has been present from the start a '0' is signalled indicating that the edge is probably before picture point '0'. Thus a 4 bit code is sufficient to signal; '0' = edge before picture point 0, '1' = edge after picture point 9 or 2 to 7 = edge positions 2 to 7.

Referring to Figure 5, the first picture point of the tracking window is analysed at 'start'. If this first picture point is white (W) then proceed to state '20'; if it is black (B) proceed to state '10'. Progression between states continues in a similar fashion. The square box 'Set Edge' indicates that the edge position is the position of the picture point which has just been used. If the last picture point within the tracking window has been used without an edge being found exit from the state diagram, with a resultant 4 bit code of 0 or 1, is indicated by the arrow marked 'E'.

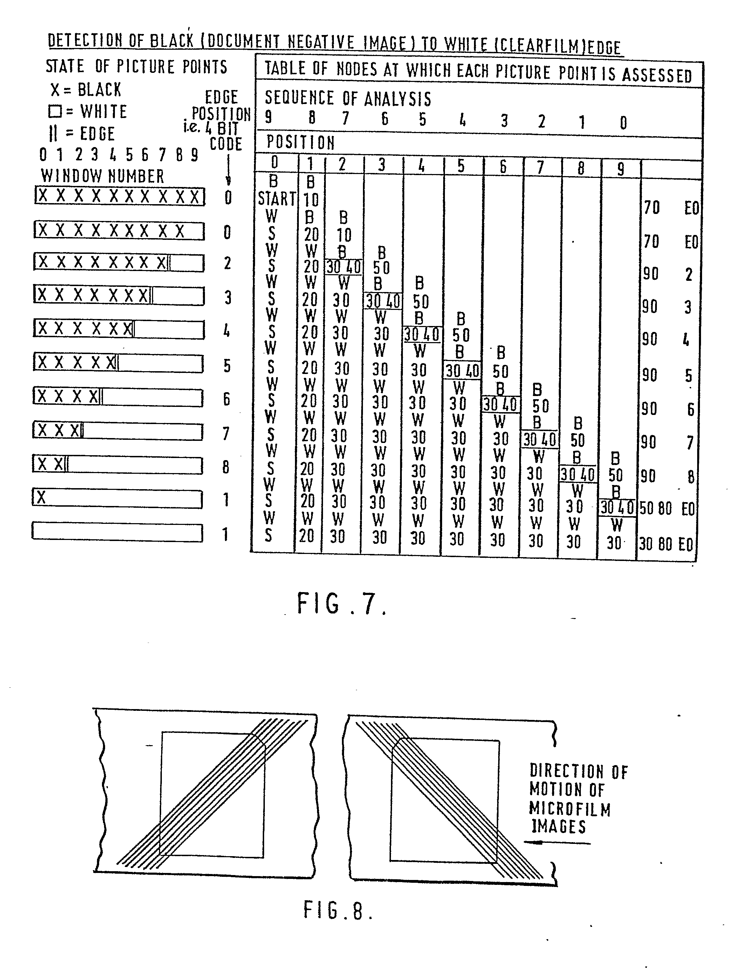

Figure 7 sets out some examples of the contents of a tracking window for the detection of a black (document negative image) to white (clear film) transition together with the corresponding edge positions and sequence of analysis. The sequence of analysis contains references to the state diagram Figure 5 but it should be noted that the picture points are analysed in the reverse sequence to that illustrated in Figure 6.

The control processor 30 stores the coordinates of the edge of the image when the direction of movement to centralise the ten bit window changes, that is when a further corner of the image is located. The coordinates of the located image corners are stored in the shared memory unit 34 of the control processor 30 which is accessed by the main processor 42. If the video processing unit 26 detects more than four corners to the image,

0021794

caused for example by a folded document corner, a signal is sent to the main processor 42 which stops the film and presents the image for manual verification.

After the edge of the image has been tracked for a preset number of scans, this number of scans being determined by the permissible document image sizes, the remaining two of the four latches of the video processing unit are brought into operation. These remaining latches now operate in the search mode described above and are preparing for the detection of the next image. When the next image is located these latches are also switched into the tracking mode of operation. Due to the inclination of the scan with respect to the microfilm, the checking device will often be tracking the edges of the two images simultaneously. However, data from the two pairs of latches is stored separately so that the images are not confused.

When the two members of a pair of tracking windows coincide, that is when the final corner of a document image has been reached the main processor again comes into operation.

The control processor 30 passes information concerning the location of the corners of an image and the sequence in which they were detected to the main processor 42. The main processor calculates the area of the image from the corner location data and accesses this and other data received in the light of alternative specifications previously stored in EAROMS (Electrically Alterable Read Only MemorieS) or keyed in by the operator through the keyboard 44. These specifications define image dimensions, number and position of corners, area, skew and relevant tolerances for each acceptable image shape and size and also the maximum ratio of white to black on the negative image.

The video processing unit 26 also contains a counter which counts the number of black data bits encountered between the tracking windows whilst they are tracking the edge of an image. This enables both the contrast and the intensity, that is the emulsion density, of the image to be checked by comparing the total number of black data points within the image with the image area and a preset acceptable ranges of these parameters. Each image is thus checked to ensure that the interior of the image is satisfactory. Thus, a hole within an original document will be detected at this stage. If the comparison, which is carried out by the main processor, fails then the film is stopped for visual inspection of the image. After having thus fully verified the image the main processor 42 then switches the pairs of latches so that the pair which was following the next image again revert to the search mode whilst the pair which have just completed tracking an image now take over the task of tracking the next image. If both tracking windows lose the edge of the image at the same time the main processor checks if the windows are close together since if they are, then the final edge of the image will be assumed to have been past and the same sequence of operations initiated as if the final corner had been detected.

Using a 256 point array scanning 16 mm film each tracking window is 0.884 mm long on the film, equivalent to approximately 21 mm on the document at 24 times magnification. The projected
length orthogonal to an edge of the document is $21 \div 1.414 \simeq 15$ mm,
and the edge following ensures that only about half of the window
lies on the document image. Under these conditions it is advisable
to have a clear border around the original document of approximately
10 mm.

Of the tracking window length of ten picture points, at least
two are used to confirm the condition before the edge, leaving
an effective window of 8. However, if the edge is lost this
window may be moved plus or minus five picture points, giving
an effective window of 18 picture points, but without the disadvantage
of requiring an increased width of clear border.

If documents with one corner intentionally cut off are microfilmed,
it is desirable for the scanning array to be orthogonal to the
edge of the corner, see Figure 8. It may be necessary for the
angle of inclination of the scan relative to the edge of the
microfilm to be other than 45 degrees for this purpose. It should
be noted that the angle of inclination of the scan may in general
be other than 45 degrees and is chosen so as to optimise the
amount of data available on each of the edges of the expected
images. In instances where the documents have one corner intentionally
cut off it may be necessary to provide a third scanning array.
Such an instance is illustrated in Figure 8 where a third array
inclined at an angle of 135 degrees is provided so that the array
which is most nearly orthogonal to the edge of the cut corner
may be selected.

CLAIMS

1. An automatic image checking device comprising a scanning array (24) and a device (12) for providing relative movement between the scanning array (24) and the images to be checked lying within a field of view, characterised in that the scan lines of the array are inclined with respect to the direction of relative motion so as to increase the number of scan lines containing data relating to image edges orthogonal to the said direction of relative motion.

2. A device as claimed in claim 1, characterised by a device (28,30) for analysing the scanned data within each line to determine the position of edges of images within the field of view and for determining, for the next following scan line, windows within which the edges of the images are expected to be detected, only data falling within the said windows being analysed during operation.

3. A device as claimed in claim 2, characterised by the device (28,30) which is operative when an edge is not detected within a window to displace the window in the subsequent scan line by a predetermined amount.

4. A device as claimed in claim 3, characterised in that the direction of displacement of the window is determined by the data contained within the window of the scan in which the edge of the image was not detected.

5. A device as claimed in any preceding claim, further characterised by the provision of an additional scanning array (24), the scan lines of which are orthogonal to the direction of relative motion so as to be capable of identifying a gap between consecutive images, the edges of which are orthogonal to the direction of motion.

6. A device as claimed in claimed in claim 5 as appended to claim 2, wherein the device (28,30) for analysing is operative to process only data lying to one side of a gap as determined by the scanning array orthogonal to the direction of motion.

7. A device as claimed in any preceding claim, wherein the scan lines of the inclined array (24) lie at substantially $45^{o}$ to the said direction of relative motion.

8. A device as claimed in any of claims 1 to 6, further characterised by the provision of a first inclined array (24) the scan lines of which are arranged at an angle of substantially $45^{o}$ to the direction of relative motion and a second inclined array the scan lines of which are inclined at an angle of substantially $135^{o}$ to the direction of relative motion, selection being effected between one and the other of the inclined arrays in dependence upon the geometry of the image in the field of view.

9. A device as claimed in any preceding claim, wherein the or each scanning array comprises at least one charge coupled photosensitive imager.

DIRECTION OF
MOTION OF
MICROFILM
IMAGES

FIG.1A.

DIRECTION OF
MOTION OF
MICROFILM
IMAGES

× POINTS OF TRANSITION FROM WHITE TO BLACK OR VICE VERSA
FIG.1B.

DIRECTION
OF MOTION OF
MICROFILM
IMAGES

POINTS OF TRANSITION FROM WHITE TO BLACK OR VICE VERSA
FIG.2.

FIG. 3.

WHITE DETECTED

BLACK DETECTED

MOVEMENT OF WINDOW AFTER LOSS OF EDGE

WINDOWS

EDGE OF FILM

CORNER DETECTION BY 6 BIT SEARCH WINDOW

1st. TRACKING SCAN

TRACKING WINDOWS OVERLAPPED

ANGLE OF DOCUMENT SKEW

NEGATIVE DOCUMENT IMAGE

LIMIT OF TEXT AREA

BORDER (BLACK)

FIG.4 .

3-6

BASED ON CONVENTION FOR NEGATIVE FILM
'W' = 0 = 'WHITE' = BACKGROUND
'B' = 1 = 'BLACK' = DOCUMENT IMAGE
ALSO E = LAST BIT IN WINDOW HAS BEEN USED.

FIG.5 .

5-6

DETECTION OF WHITE (CLEARFILM) TO BLACK DOCUMENT (NEGATIVE IMAGE) EDGE

| STATE OF PICTURE POINTS | | TABLE OF NODES AT WHICH EACH PICTURE POINT IS ASSESSED |
| --- | --- | --- |

X = BLACK    ‖ = EDGE    EDGE POSITION

□ = WHITE    i.e. 4 BIT CODE

SEQUENCE OF ANALYSIS

0 1 2 3 4 5 6 7 8 9 CODE

WINDOW NUMBER

| Window | Code | 0 | 1 | 2 | 3 | 4 | 5 | 6 | 7 | 8 | 9 | | | |
| --- | --- | --- | --- | --- | --- | --- | --- | --- | --- | --- | --- | --- | --- | --- |
| [ ] | 1 | W/S | W/20 | W/30 | W/30 | W/30 | W/30 | W/30 | W/30 | W/30 | W/30 | 30 | 80 | E1 |
| [ X] | 1 | W/S | W/20 | W/30 | W/30 | W/30 | W/30 | W/30 | W/30 | W/30 | B/30 40 | 50 | 80 | E1 |
| [ ‖X X] | 8 | W/S | W/20 | W/30 | W/30 | W/30 | W/30 | W/30 | W/30 | B/30 40 | B/50 | 90 | | 8 |
| [ ‖X X X] | 7 | W/S | W/20 | W/30 | W/30 | W/30 | W/30 | W/30 | B/30 40 | B/50 | | 90 | | 7 |
| [ ‖X X X X] | 6 | W/S | W/20 | W/30 | W/30 | W/30 | W/30 | B/30 40 | B/50 | | | 90 | | 6 |
| [ ‖X X X X X] | 5 | W/S | W/20 | W/30 | W/30 | W/30 | B/30 40 | B/50 | | | | 90 | | 5 |
| [ ‖X X X X X X] | 4 | W/S | W/20 | W/30 | W/30 | B/30 40 | B/50 | | | | | 90 | | 4 |
| [ ‖X X X X X X X] | 3 | W/S | W/20 | W/30 | B/30 40 | B/50 | | | | | | 90 | | 3 |
| [ ‖X X X X X X X X] | 2 | W/S | W/20 | B/30 40 | B/50 | | | | | | | 90 | | 2 |
| [ X X X X X X X X X] | 0 | W/S | B/20 | B/10 | | | | | | | | 70 | | E0 |
| [X X X X X X X X X X] | 0 | B/S | B/10 | | | | | | | | | 70 | | E0 |

SELECTION OF MISCELLANEOUS PATTERNS

| Window | Code | 0 | 1 | 2 | 3 | 4 | 5 | 6 | 7 | 8 | 9 | | | |
| --- | --- | --- | --- | --- | --- | --- | --- | --- | --- | --- | --- | --- | --- | --- |
| [ X  X  ‖X X] | 7 | W/S | B/20 | W/10 | B/20 | W/10 | W/20 | W/30 | B/30 40 | B/50 | | 90 | | 7 |
| [ ‖X  X  X X X] | 2 | W/S | W/20 | B/30 40 | W/50 | B/60 | B/50 | | | | | 90 | | 2 |
| [ ‖X  X  X X X] | 2 | W/S | W/20 | B/30 40 | W/50 | B/60 | W/50 | W/60 | B/60 | B/50 | | 90 | | 2 |
| [ ‖X X  X X X X] | 2 | W/S | W/20 | B/30 40 | B/50 | W | W | B | B | | | 90 | | 2 |
| [ X  X  ‖X X X X] | 6 | W/S | B/20 | W/10 | B/20 | W/10 | W/20 | B/30 40 | B/50 | | | 90 | | 6 |
| [X  X  X  ‖X X X] | 7 | B/S | W/10 | B/20 | W/10 | B/20 | W/30 | W/30 | B/30 40 | B/50 | | 90 | | 7 |
| [X  X  X  X] | 1 | B/S | W/10 | B/20 | W/10 | B/20 | W/10 | W/20 | B/30 40 | W/50 | W/60 | 60 | 80 | E1 |
| [X  X  X] | 1 | B/S | W/10 | B/20 | W/30 | B/30 40 | W/50 | W/60 | B/50 | W/60 | W/60 | 60 | 80 | E1 |
| [X  X  X  X] | 1 | B/S | W/10 | B/20 | W/10 | B/20 | W/10 | B/20 | W/10 | B/20 | W/30 | 30 | 80 | E1 |
| [X  X  X  X  X] | 0 | B/S | W/10 | B/20 | W/10 | B/20 | W/10 | B/20 | W/10 | B/20 | W/10 | 20 | 70 | E0 |
| [ X  X  X  X  X] | 0 | W/S | B/20 | W/10 | B/20 | W/10 | B/20 | W/10 | B/20 | W/10 | B/20 | 10 | 70 | E0 |

FIG. 6.

## DETECTION OF BLACK (DOCUMENT NEGATIVE IMAGE) TO WHITE (CLEARFILM) EDGE

STATE OF PICTURE POINTS

X = BLACK
□ = WHITE
‖ = EDGE

EDGE POSITION i.e. 4 BIT CODE

0 1 2 3 4 5 6 7 8 9
WINDOW NUMBER

| Window | Code |
|--------|------|
| [X X X X X X X X X X] | 0 |
| [X X X X X X X X X □] | 0 |
| [X X X X X X X X‖] | 2 |
| [X X X X X X X‖] | 3 |
| [X X X X X X‖] | 4 |
| [X X X X X‖] | 5 |
| [X X X X‖] | 6 |
| [X X X‖] | 7 |
| [X X‖] | 8 |
| [X] | 1 |
| [ ] | 1 |

### TABLE OF NODES AT WHICH EACH PICTURE POINT IS ASSESSED

SEQUENCE OF ANALYSIS

| 9 | 8 | 7 | 6 | 5 | 4 | 3 | 2 | 1 | 0 | | |
|---|---|---|---|---|---|---|---|---|---|---|---|
| POSITION | | | | | | | | | | | |
| 0 | 1 | 2 | 3 | 4 | 5 | 6 | 7 | 8 | 9 | | |
| B START | B 10 | | | | | | | | | | |
| W S | B 20 | B 10 | | | | | | | | 70 | EO |
| W S | W 20 | B 30 40 | B 50 | | | | | | | 70 | EO |
| W S | W 20 | W 30 | B 30 40 | B 50 | | | | | | 90 | 2 |
| W S | W 20 | W 30 | W 30 | B 30 40 | B 50 | | | | | 90 | 3 |
| W S | W 20 | W 30 | W 30 | W 30 | B 30 40 | B 50 | | | | 90 | 4 |
| W S | W 20 | W 30 | W 30 | W 30 | W 30 | B 30 40 | B 50 | B | | 90 | 5 |
| W S | W 20 | W 30 | W 30 | W 30 | W 30 | W 30 | B 30 40 | B 50 | B | 90 | 6 |
| W S | W 20 | W 30 | W 30 | W 30 | W 30 | W 30 | W 30 | B 30 40 | B 50 | 90 | 7 |
| W S | W 20 | W 30 | W 30 | W 30 | W 30 | W 30 | W 30 | W 30 | B 30 40 | 90 50 80 | 8 EO |
| W S | 20 | 30 | 30 | 30 | 30 | 30 | 30 | 30 | W 30 | 30 80 | EO |

## FIG .7.

DIRECTION OF MOTION OF MICROFILM IMAGES

## FIG.8.

## European Patent Office — EUROPEAN SEARCH REPORT

Application number

EP 80 30 2064

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | B 65 H 7/14<br>G 06 F 15/20 |
| | US - A - 3 496 541 (FARRINGTON ELECTRONICS)<br><br>* Column 3, lines 57-68; column 5, lines 18-27 *<br><br>-- | 1 | |
| | IBM TECHNICAL DISCLOSURE BULLETIN, vol. 21, no. 4, September 1978, pages 1424-1425<br>New York, U.S.A.<br>D.G. ABRAHAM: "Rotating image data"<br><br>* Page 1424, lines 1,2; figure 1 *<br><br>---- | 1 | |

TECHNICAL FIELDS SEARCHED (Int.Cl. 3)

B 65 H 7/14
G 06 F 15/20
G 06 K 9/00
B 65 H 7/06
        7/08
        7/10

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 01-10-1980 | BURGAUD |

EPO Form 1503.1  06.78